# EUROPEAN PATENT SPECIFICATION

(11) **EP 4 403 746 B1**
(45) Date of publication and mention of the grant of the patent: **20.05.2026**
(21) Application number: 24152988.2
(22) Date of filing: 19.01.2024
(51) Int. Cl.: F01D 5/14

(54) **AIRFOIL WITH THICK WISHBONE FIBER STRUCTURE**
SCHAUFEL MIT DICKER GABELBAUMFASERSTRUKTUR
PROFIL AÉRODYNAMIQUE AVEC STRUCTURE FIBREUSE À WISHBONE ÉPAISSE

(30) Priority: 20.01.2023 US 202318099610
(43) Date of publication of application: 24.07.2024
(73) Proprietor: RTX Corporation, Farmington, CT 06032 (US)
(72) Inventor: CAMPBELL, Christian X., West Hartford, 06119 (US)
(74) Representative: Dehns

(56) References cited:
- US-A1- 2018 363 475
- US-A1- 2022 228 496
- US-B2- 9 664 053

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils in the turbine section are typically formed of a superalloy and may include thermal barrier coatings to extend temperature capability and lifetime. Ceramic matrix composite ("CMC") materials are also being considered for airfoils. Among other attractive properties, CMCs have high temperature resistance. Despite this attribute, however, there are unique challenges to implementing CMCs in airfoils.

US 2022/228496 A1 discloses a prior art airfoil according to the preamble of claim 1.

US 9,664,053 B2 discloses a prior art integral textile structure for 3-D ceramic matrix composite (CMC) turbine airfoils.

US 2018/363475 A1 discloses a prior art CMC hollow blade and a prior art method of forming a CMC hollow blade.

### SUMMARY

According to a first aspect of the present invention, there is provided an airfoil as set forth in claim 1.

In an embodiment of the foregoing embodiments, the third thickness is greater than the first thickness by a factor of at least 3.

In a further embodiment of any of the foregoing embodiments, the third thickness is greater than the first thickness by a factor of 3.2 - 4.8.

In a further embodiment of any of the foregoing embodiments, the second thickness is greater than the first thickness by a factor of at least 1.5.

In a further embodiment of any of the foregoing embodiments, the second thickness is greater than the first thickness by a factor of 1.6 - 2.4.

In a further embodiment of any of the foregoing embodiments, the third thickness is greater than the first thickness by a factor of 3.2 - 4.8, and the second thickness is greater than the first thickness by a factor of 1.6 - 2.4.

In a further embodiment of any of the foregoing embodiments, the airfoil wall includes at least one cooling hole within the single leg and that opens to the cavity.

In a further embodiment of any of the foregoing embodiments, the airfoil wall includes an insert located in a pocket between the second section of the first arm and the second section of the second arm.

In a further embodiment of any of the foregoing embodiments, the insert includes a concave forward side and a convex aft side facing, respectively, toward the leading edge and the trailing edge. The concave forward side and the convex aft side have approximately equivalent radii of curvature.

In a further embodiment of any of the foregoing embodiments, the airfoil wall includes first and second fiber plies, the first fiber ply in contact with and conformance with the concave forward side, the second fiber ply in contact with and conformance with the convex aft side, wherein the radii of curvature of the concave forward side and the convex aft side are equal to a minimum bend radius of the first and second fiber plies.

In a further embodiment of any of the foregoing embodiments, the airfoil wall includes first and second trailing edge plies between which the single leg is sandwiched, the first and second trailing edge plies extending along the single leg and along a portion of the second sections of, respectively, the first and second arms.

In a further embodiment of any of the foregoing embodiments, the first and second trailing edge plies terminate at a location that is aft of the first sections of, respectively the first and second arms and that is forward of a location at which the first and second arms merge to form the single leg.

In a further embodiment of any of the foregoing embodiments, the airfoil wall includes at least one skin fiber ply that wraps around the cavity and partially overlaps the first and second trailing edge plies.

In a further embodiment of any of the foregoing embodiments, the trailing edge is machined.

According to a further aspect of the present invention, there is provided a gas turbine engine as set forth in claim 15.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 illustrates a gas turbine engine.
Figure 2 illustrates a sectioned view of an airfoil from the engine.
Figure 3 illustrates a wishbone fiber structure from the airfoil.
Figure 4 illustrates a fiber configuration of the wishbone fiber structure.
Figure 5 illustrates a fiber ply lay-up configuration in the trailing edge of an airfoil.
Figure 6 illustrates an example of an airfoil with a machined edge.
Figure 7 demonstrates an example of fabricating an airfoil.

In this disclosure, like reference numerals designate like elements where appropriate and reference numerals with the addition of one-hundred or multiples thereof designate modified elements that are understood to incorporate the same features and benefits of the corresponding elements.

### DETAILED DESCRIPTION

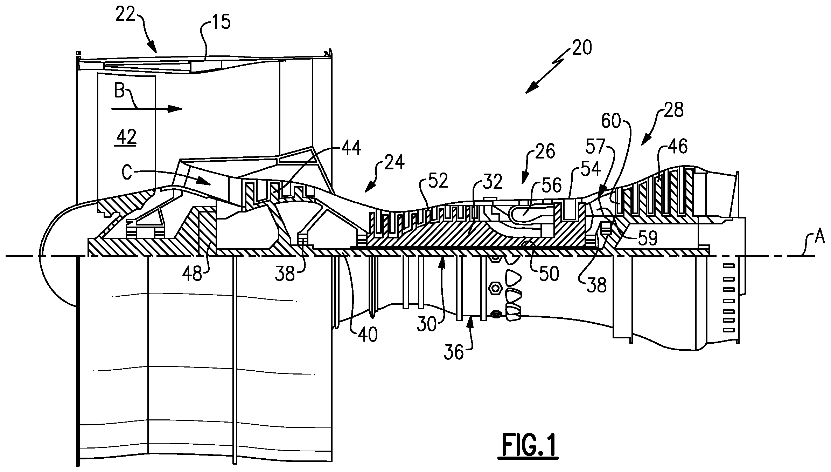

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

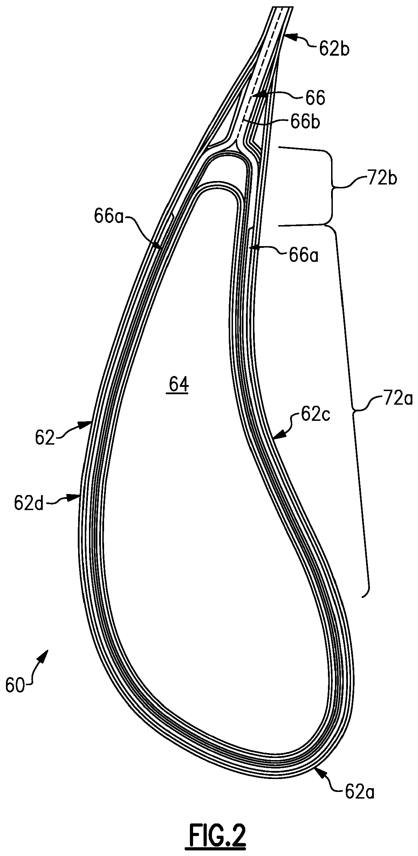

Figure 2 illustrates a sectioned view of an example airfoil 60 from the turbine section 28 of the engine 20 (see also Figure 1). For example, the airfoil 60 may be a blade or a vane. It is to be understood that although the examples herein are discussed in context of a turbine airfoil, the examples can also be applied to airfoils in other sections of the engine 20.

The aerodynamic profile of the airfoil 60 is formed by an airfoil wall 62. In this regard, the airfoil wall 62 defines a leading edge 62a, a trailing edge 62b, a pressure side 62c, and a suction side 62d of the airfoil 60. The airfoil wall 62 circumscribes an interior cavity 64, to which cooling air (e.g., from the compressor section 24) may be provided. One or more ribs may be provided across the cavity 64 to partition it into two or more sub-cavities.

The airfoil wall 62 is formed of a ceramic matrix composite (CMC). A CMC material is comprised of one or more ceramic fiber plies in a ceramic matrix. Example ceramic matrices are silicon-containing ceramic, such as but not limited to, a silicon carbide (SiC) matrix or a silicon nitride (Si3N4) matrix. Example ceramic reinforcement of the CMC are silicon-containing ceramic fibers, such as but not limited to, silicon carbide (SiC) fiber or silicon nitride (Si3N4) fibers. The CMC may be, but is not limited to, a SiC/SiC ceramic matrix composite in which SiC fiber plies are disposed within a SiC matrix. A fiber ply has a fiber architecture, which refers to an ordered arrangement of the fiber tows relative to one another, such as a 2D woven ply or a 3D structure.

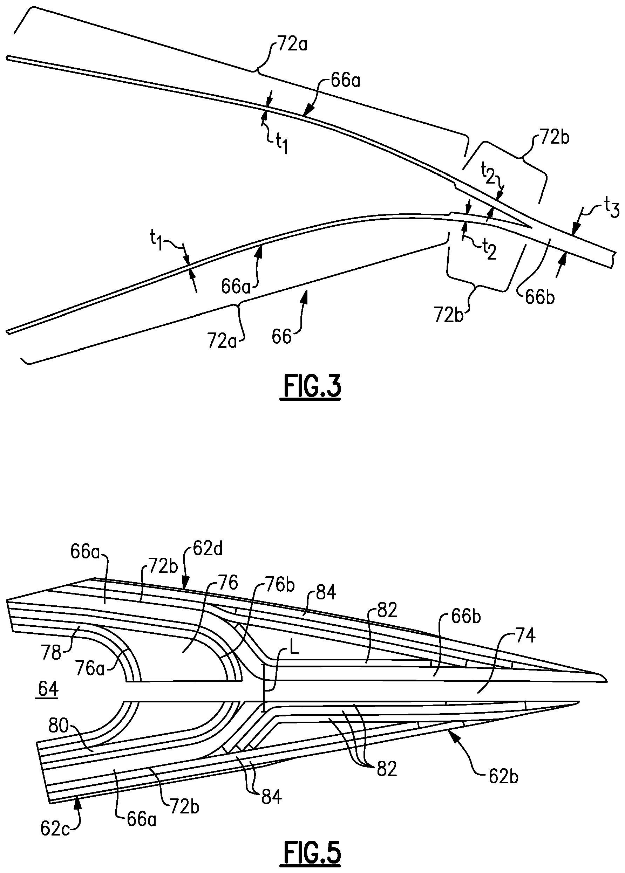

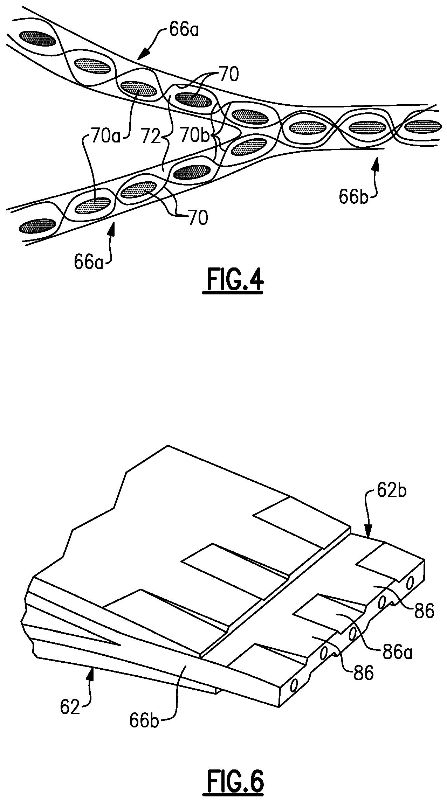

The airfoil wall 62 includes a wishbone-shaped fiber layup structure 66, which is also shown in an isolated, sectioned view (taken along a plane that includes the engine axis A) in Figure 3. The term "wishbone-shaped" refers to the resemblance of the structure 66 to a wishbone that has a leg and two arms that extend from an end of the leg to form a "V." Here, the structure 66 includes a pair of arms 66a that merge into a single leg 66b. Figure 4 shows a representative example of the fiber configuration of the structure 66 for the purpose of describing how the arms 66a merge into the leg 66b (figure not to scale and may contain additional fiber tows). The arms 66a are comprised of a network (e.g., a weave) of fiber tows 70 (warp tows 70a and weft tows 70b) that are disposed in a matrix material 72. It is to be understood that, although the network of fiber tows 70 is shown with a particular weave pattern, other weave patterns may be used. The weft tows 70b merge together such that the tows 70b from each of the arms 66a are interwoven in the single leg 66b. Thus, once merged, the arms 66a cease to be distinct from each other and there are no interlaminar interfaces.

Referring again to Figure 3, each of the first and second arms 66a include a first section 72a that is distal from the single leg 66b and a second section 72b that is proximal to the single leg 66b. The first section 72a defines a first thickness (t1) and the second section 72b defines a second thickness (t2) that is greater than the first thickness (t1). The single leg 66b defines a third thickness (t3) that is greater than the second thickness (t2).

In a wishbone fiber structure in which the arms simply merge into a single leg, the leg may nominally be of equal or lesser thickness than the sum of the thickness of the arms. While mechanically strong, this thickness of the single leg may not be desirable in some designs, particularly where cooling holes are to be drilled through the trailing edge to the internal cavity. For instance, the diameter of the cooling hole may exceed or approach the thickness of the single leg and thus require an undesirable condition in which the cooling hole has to be drilled along an interlaminar interface between the single leg and an adjacent fiber layer.

In the structure 66, however, the arms 66a increase in thickness from the first section 72a to the second section 72b. Thus, when the second sections 72b merge, a thicker single leg 66b is formed. The increased thickness of the second sections 72b in comparison to the first sections 72a allows for more tows to interconnect in the single leg 66b, thereby enhancing strength and toughness in the trailing edge 62b and preventing delamination. Such a configuration further permits the first sections 72a to be relatively thin so that they remain pliable and can be conformed to a desirable design geometry of the airfoil 60. Accordingly, the structure 66 provides a thicker single leg 66b without having to make the arms 66a so thick that they lose pliability. The thickness also facilitates containment of drilled cooling holes, thereby reducing the chances of causing delamination. The structure 66 may also facilitate reducing disparities at the free surfaces in the tip of the trailing edge 62b. For instance, a starting fabric may have discontinuities at its edges, where fibers are misaligned or unraveled. If such discontinuities are ultimately located at the tip of the trailing edge, the properties of the tip region may be debited. However, the use of the excess sacrificial length of the single leg 66b means that the tip of the trailing edge 62b correspond to a central portion of the fabric instead of a free edge.

In one example, the third thickness (t3) is greater than the first thickness (t1) by a factor of at least 3, such as by a factor of 3.2 - 4.8. In a further example, the second thickness (t2) is greater than the first thickness (t1) by a factor of at least 1.5, such as by a factor of 1.6 - 2.4. In the above examples, the first thickness (t1) may be from approximately 0.005 to 0.015 inches (0.127 to 0.381 mm).

Figure 5 illustrates a fiber ply lay-up configuration in the trailing edge 62b and vicinity, to demonstrate an example implementation of the structure 66. Although the illustrated configuration is useful, it is to be appreciated that the structure 66 is not limited and may be used in other configurations. The airfoil wall 62 includes at least one cooling hole 74 that extends substantially within the single leg 66b and that opens to the cavity 64. As shown, the cooling hole 74 is biased toward the pressure side 62c of the airfoil 60. As a result, at the location of the hole 74 there is a greater thickness of the single leg 66b on the suction side 62d of the hole 74 than on the pressure side 62c. Such a biasing maintains more material on the suction side 62d of the hole 74, where higher stresses are expected in comparison to the lower stress pressure side 62c.

There is also an insert 76 located in a pocket between the second sections 72b of the arms 66a. The insert 76 is a non-structural spacer and is sometimes referred to as a "noodle" because it may be formed from a bundle of fiber tows that resemble spaghetti noodles, although it can alternatively be formed of other materials such as, but not limited to, monolithic ceramics.

The insert 76 includes a concave forward side 76a and a convex aft side 76b that face, respectively, toward the leading edge 62a and the trailing edge 62b. The term "concave" and "convex" are relative to the center of the insert 76. The sides 76a/76b have approximately equivalent radii of curvature. The airfoil wall 62 further includes at least first and second fiber plies 78/80. The first fiber ply 78 is in contact with, and conformance with, the concave forward side 76a. The second fiber ply 80 is in contact with, and conformance with, the convex aft side 76b. The radii of curvature of the sides 76a/76b are equal to a minimum bend radius of the fiber plies 78/80. A minimum bending radius can be determined from a supplier of the fabric, estimated based on fiber properties, or readily determined by trial. For example, a fiber tow is wrapped around cylinders with progressively smaller diameters, and the point at which the tows begin to break is the minimum bend radius.

In the trailing edge 62b, the airfoil wall 62 also includes various other fiber layers that help form the desired geometry. The airfoil wall 62 includes trailing edge plies 82 between which the single leg 66b is sandwiched. The plies 82 are relatively small and only extend only a short distance forward along the single leg 66b and along a portion of the second sections 72b of the arms 66a before terminating. The plies 82 terminate at a location that is aft of the first section 72a and that is forward of a location (L) at which the arms 66a merge to form the single leg 66b.

One or more of the plies 82 are interleaved with one or more skin fiber plies 84 that wrap completely around the airfoil 60, i.e., from the trailing edge 62b, through the pressure side 62c, through the leading edge 62a, through the suction side 62d, and back to the trailing edge 62b. In this interleaved structure, at least one or more of the plies 82 are exposed on the exterior of the aft portion of the trailing edge 62b. The skin plies 84 overlap the forward portions of the one or more plies 80. Such a configuration permits the trailing edge 62b to taper in thickness, and if any delamination should occur at the trailing free edge of the one or more plies 80, the short length of the plies 80 arrests the delamination in the trailing edge 62b because the plies 80 do not extend further forward.

Figure 6 illustrates an additional example of the airfoil 60. In this example, the trailing edge 62b is machined at 86. For example, the machined edge 86 is scalloped by machining axial slots 86a into the surface of the trailing edge 62b. The trailing edge 62b gets relatively hotter than forward portions of the airfoil 60 during engine operation. This discrepancy in temperature can cause thermal stresses. The scalloped configuration permits the trailing edge 62b to be thinner in some locations, and thus more pliable in order to facilitate mitigation of thermal stresses. Additionally, the geometry of the machined edge 86 may be used to tailor the frequency vibration response of the trailing edge 62b, to facilitate mitigation of vibrational stresses.

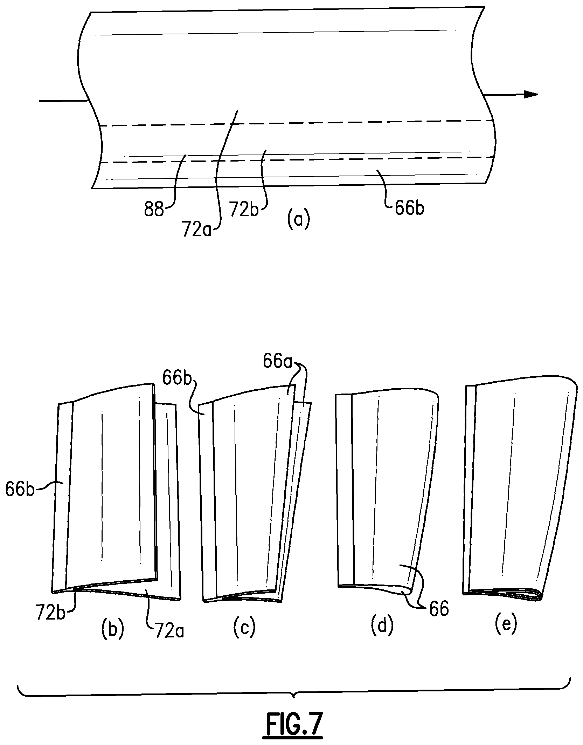

Figure 7 demonstrates an example of fabricating the airfoil 60. At step (a), a fabric 88 is provided. The fabric 88 may be provided as a pre-made product or, if not pre-made, the fabric 88 may be made in a weaving process. The fabric 88 is woven in the warp direction such that the single leg 66b runs length-wise in the warp direction. To step-down the thickness from the single leg 66b to the thinner second segment 72b and from the second segment 72b to the thinner first segment 72a, the number of warp fibers is reduced and/or some of the weft fibers that are woven in 66b are left unwoven for 72/72b (and later cut off). Thus, the thickness of 66b/72a/72b can be controlled by manipulating the numbers of fibers and/or by using looser or tighter weave patterns.

At step (b), the fabric length is trimmed to the desired size of the airfoil 60 that is to be produced. For example, the fabric length corresponds to the radial span that the airfoil 60 will have. At step (c), the arms 66a are trimmed to the desired geometry of the airfoil 60 that is to be produced. For example, the arms 66a are trimmed at an angle such that the chord of the airfoil either increases or decreases over the radial span. At step (d), the arms 66a are wrapped to form the geometry of the airfoil 60. For instance, the arms 66a may be wrapped around a mandrel to form the desired shape. At step (e), the additional plies 82/84 are applied, followed by densification to add a fiber interface coating and the matrix material. Afterwards, one or more post-processing steps may be conducted, depending on the airfoil design. For instance, the single leg 66b may initially be over-sized in the axial direction. In that case, the excess sacrificial length may be trimmed to produce the design geometry. Additionally or alternatively, the cooling hole(s) 74 may be drilled in the trailing edge 62b. For example, laser drilling may be used. In further examples, the trailing edge 62b may be further machined to tailor the geometry. For instance, the scallops 86 may be machined into the trailing edge, or the terminal ends of the pressure and/or suction sides may be "scarf" machined to round-off relatively sharp edges that may otherwise fracture off during use.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An airfoil comprising:
an airfoil wall (62) circumscribing a cavity (64) and defining a leading edge (62a), a trailing edge (62b), and pressure and suction sides (62c, 62d) that join the leading edge (62a) and the trailing edge (62b), the airfoil wall (62) including a wishbone-shaped fiber layup structure (66), wherein:
the wishbone-shaped fiber layup structure (66) includes first and second arms (66a) that merge into a single leg (66b);
the first and second arms (66a) comprise a network of fiber tows (70); and
the single leg (66b) includes fiber tows (70) from each of the first and second arms (66a) that are interwoven, the single leg (66b) forming at least a portion of the trailing edge (62b) of the airfoil wall (62),
**characterized in that**:
each of the first and second arms (66a) includes a first section (72a) that is distal from the single leg (66b) and a second section (72b) that is proximal to the single leg (66b);
the first section (72a) defines a first thickness (t1) and the second section (72b) defines a second thickness (t2) that is greater than the first thickness (t1); and
the single leg (66b) defines a third thickness (t3) that is greater than the second thickness (t2).

2. The airfoil as recited in claim 1, wherein the third thickness (t3) is greater than the first thickness (t1) by a factor of at least 3.

3. The airfoil as recited in claim 2, wherein the third thickness (t3) is greater than the first thickness (t1) by a factor of 3.2 - 4.8.

4. The airfoil as recited in any preceding claim, wherein the second thickness (t2) is greater than the first thickness (t1) by a factor of at least 1.5.

5. The airfoil as recited in claim 4, wherein the second thickness (t2) is greater than the first thickness (t1) by a factor of 1.6 - 2.4.

6. The airfoil as recited in claim 1, wherein the third thickness is greater than the first thickness by a factor of 3.2 - 4.8, and the second thickness is greater than the first thickness by a factor of 1.6 - 2.4.

7. The airfoil as recited in any preceding claim, wherein the airfoil wall (62) includes at least one cooling hole (74) within the single leg (66b) and that opens to the cavity (64).

8. The airfoil as recited in any preceding claim, wherein the airfoil wall (62) includes an insert (76) located in a pocket between the second section (72b) of the first arm (66a) and the second section (72b) of the second arm (66a).

9. The airfoil as recited in claim 8, wherein the insert (76) includes a concave forward side (76a) and a convex aft side (76b) facing, respectively, toward the leading edge (62a) and the trailing edge (62b), and the concave forward side (76a) and the convex aft side (76b) have approximately equivalent radii of curvature.

10. The airfoil as recited in claim 9, wherein the airfoil wall (62) includes first and second fiber plies (78, 80), the first fiber ply (78) in contact with and conformance with the concave forward side (76a), the second fiber ply (80) in contact with and conformance with the convex aft side (76b), and the radii of curvature of the concave forward side (76a) and the convex aft side (76b) are equal to a minimum bend radius of the first and second fiber plies (78, 80).

11. The airfoil as recited in any preceding claim, wherein the airfoil wall (62) includes first and second trailing edge plies (82) between which the single leg (66b) is sandwiched, the first and second trailing edge plies (82) extending along the single leg (66b) and along a portion of the second sections (72b) of, respectively, the first and second arms (66a).

12. The airfoil as recited in claim 11, wherein the first and second trailing edge plies (82) terminate at a location that is aft of the first sections (72a) of, respectively the first and second arms (66a) and that is forward of a location at which the first and second arms (66a) merge to form the single leg (66b).

13. The airfoil as recited in claim 11 or 12, wherein the airfoil wall (62) includes at least one skin fiber ply (84) that wraps around the cavity (64) and partially overlaps the first and second trailing edge plies (82).

14. The airfoil as recited in any preceding claim, where the trailing edge (62b) is machined.

15. A gas turbine engine comprising:
a compressor section (24);
a combustor (56) in fluid communication with the compressor section (24); and
a turbine section (28) in fluid communication with the combustor (56), the turbine section (28) including a plurality of airfoils (60), each airfoil (60) as recited in any preceding claim.

## Patentansprüche

1. Strömungsprofil, umfassend:
eine Strömungsprofilwand (62), die einen Hohlraum (64) umgibt und eine Vorderkante (62a), eine Hinterkante (62b) sowie eine Druck- und eine Saugseite (62c, 62d) definiert, die die Vorderkante (62a) und die Hinterkante (62b) verbinden, wobei die Strömungsprofilwand (62) eine gabelbeinförmige Faserlayup-Struktur (66) beinhaltet, wobei:
die gabelbeinförmige Faserlayup-Struktur (66) einen ersten und einen zweiten Arm (66a) beinhaltet, die in einen einzelnen Schenkel (66b) übergehen;
der erste und der zweite Arm (66a) ein Netzwerk aus Fasertows (70) umfassen; und
der einzelne Schenkel (66b) Fasertows (70) von jedem von dem ersten und dem zweiten Arm (66a) beinhaltet, die miteinander verwoben sind, wobei der einzelne Schenkel (66b) mindestens einen Abschnitt der Hinterkante (62b) der Strömungsprofilwand (62) bildet,
**dadurch gekennzeichnet, dass**:
jeder von dem ersten und dem zweiten Arm (66a) einen ersten Abschnitt (72a), der distal von dem einzelnen Schenkel (66b) angeordnet ist, und einen zweiten Abschnitt (72b) beinhaltet, der proximal zu dem einzelnen Schenkel (66b) angeordnet ist;
der erste Abschnitt (72a) eine erste Dicke (t1) definiert und der zweite Abschnitt (72b) eine zweite Dicke (t2) definiert, die größer als die erste Dicke (t1) ist; und
der einzelne Schenkel (66b) eine dritte Dicke (t3) definiert, die größer als die zweite Dicke (t2) ist.

2. Strömungsprofil nach Anspruch 1, wobei die dritte Dicke (t3) um einen Faktor von mindestens 3 größer als die erste Dicke (t1) ist.

3. Strömungsprofil nach Anspruch 2, wobei die dritte Dicke (t3) um einen Faktor von 3,2-4,8 größer als die erste Dicke (t1) ist.

4. Strömungsprofil nach einem der vorhergehenden Ansprüche, wobei die zweite Dicke (t2) um einen Faktor von mindestens 1,5 größer als die erste Dicke (t1) ist.

5. Strömungsprofil nach Anspruch 4, wobei die zweite Dicke (t2) um einen Faktor von 1,6-2,4 größer als die erste Dicke (t1) ist.

6. Strömungsprofil nach Anspruch 1, wobei die dritte Dicke um einen Faktor von 3,2-4,8 größer als die erste Dicke ist und die zweite Dicke um einen Faktor von 1,6-2,4 größer als die erste Dicke ist.

7. Strömungsprofil nach einem der vorhergehenden Ansprüche, wobei die Strömungsprofilwand (62) mindestens ein Kühlloch (74) innerhalb des einzelnen Schenkels (66b) beinhaltet und das sich zu dem Hohlraum (64) hin öffnet.

8. Strömungsprofil nach einem der vorhergehenden Ansprüche, wobei die Strömungsprofilwand (62) einen Einsatz (76) beinhaltet, der sich in einer Tasche zwischen dem zweiten Abschnitt (72b) des ersten Arms (66a) und dem zweiten Abschnitt (72b) des zweiten Arms (66a) befindet.

9. Strömungsprofil nach Anspruch 8, wobei der Einsatz (76) eine konkave vordere Seite (76a) und eine konvexe hintere Seite (76b) beinhaltet, die der Vorderkante (62a) bzw. der Hinterkante (62b) zugewandt sind, und die konkave vordere Seite (76a) und die konvexe hintere Seite (76b) annähernd gleichwertige Krümmungsradien aufweisen.

10. Strömungsprofil nach Anspruch 9, wobei die Strömungsprofilwand (62) eine erste und eine zweite Faserlage (78, 80) beinhaltet, wobei die erste Faserlage (78) in Kontakt mit der konkaven vorderen Seite (76a) steht und mit dieser übereinstimmt, die zweite Faserlage (80) in Kontakt mit der konvexen hinteren Seite (76b) steht und mit dieser übereinstimmt und die Krümmungsradien der konkaven vorderen Seite (76a) und der konvexen hinteren Seite (76b) gleich einem minimalen Biegeradius der ersten und der zweiten Faserlage (78, 80) sind.

11. Strömungsprofil nach einem der vorhergehenden Ansprüche, wobei die Strömungsprofilwand (62) eine erste und eine zweite Hinterkantenlage (82) beinhaltet, zwischen denen der einzelne Schenkel (66b) sandwichartig angeordnet ist, wobei die erste und die zweite Hinterkantenlage (82) sich entlang des einzelnen Schenkels (66b) und entlang eines Abschnitts der zweiten Abschnitte (72b) von dem ersten bzw. dem zweiten Arm (66a) erstrecken.

12. Strömungsprofil nach Anspruch 11, wobei die erste und die zweite Hinterkantenlage (82) an einer Stelle enden, die sich hinter dem ersten Abschnitt (72a) von dem ersten bzw. dem zweiten Arm (66a) befindet und die sich vor einer Stelle befindet, an der der erste und der zweite Arm (66a) unter Bildung des einzelnen Schenkels (66b) zusammenlaufen.

13. Strömungsprofil nach Anspruch 11 oder 12, wobei die Strömungsprofilwand (62) mindestens eine Hautfaserlage (84) beinhaltet, die den Hohlraum (64) umhüllt und die erste und die zweite Hinterkantenlage (82) teilweise überlappt.

14. Strömungsprofil nach einem der vorhergehenden Ansprüche, wobei die Hinterkante (62b) bearbeitet ist.

15. Gasturbinentriebwerk, umfassend:
einen Verdichterabschnitt (24);
eine Brennkammer (56) in Fluidverbindung mit dem Verdichterabschnitt (24); und
einen Turbinenabschnitt (28) in Fluidverbindung mit der Brennkammer (56), wobei der Turbinenabschnitt (28) eine Vielzahl von Strömungsprofilen (60) beinhaltet, wobei jedes Strömungsprofil (60) nach einem der vorhergehenden Ansprüche ausgebildet ist.

## Revendications

1. Profil aérodynamique comprenant :
une paroi (62) de profil aérodynamique circonscrivant une cavité (64) et définissant un bord (62a) d'attaque, un bord (62b) de fuite et des côtés d'intrados et d'extrados (62c, 62d) reliant le bord (62a) d'attaque et le bord (62b) de fuite, la paroi (62) de profil aérodynamique comportant une structure (66) de stratification de fibres en forme de wishbone, dans laquelle :
la structure (66) de stratification de fibres en forme de wishbone comporte un premier et un second bras (66a) qui fusionnent en une jambe (66b) unique ;
les premier et second bras (66a) comprennent un réseau de mèches (70) de fibres ; et
la jambe (66b) unique comporte des mèches (70) de fibres entrelacées provenant de chacun des premier et second bras (66a), la jambe (66b) unique formant au moins une partie du bord (62b) de fuite de la paroi (62) de profil aérodynamique, **caractérisé en ce que** :
chacun des premier et second bras (66a) comporte une première section (72a) qui est distale par rapport à la jambe (66b) unique et une second section (72b) qui est proximale par rapport à la jambe (66b) unique ;
la première section (72a) définit une première épaisseur (t1) et la second section (72b) définit une deuxième épaisseur (t2) supérieure à la première épaisseur (t1) ; et
la jambe (66b) unique définit une troisième épaisseur (t3) supérieure à la deuxième épaisseur (t2).

2. Profil aérodynamique selon la revendication 1, dans lequel la troisième épaisseur (t3) est supérieure à la première épaisseur (t1) d'un facteur d'au moins 3.

3. Profil aérodynamique selon la revendication 2, dans lequel la troisième épaisseur (t3) est supérieure à la première épaisseur (t1) d'un facteur de 3,2 à 4,8.

4. Profil aérodynamique selon une quelconque revendication précédente, dans lequel la deuxième épaisseur (t2) est supérieure à la première épaisseur (t1) d'un facteur d'au moins 1,5.

5. Profil aérodynamique selon la revendication 4, dans lequel la deuxième épaisseur (t2) est supérieure à la première épaisseur (t1) d'un facteur de 1,6 à 2,4.

6. Profil aérodynamique selon la revendication 1, dans lequel la troisième épaisseur est supérieure à la première épaisseur d'un facteur de 3,2 à 4,8, et la deuxième épaisseur est supérieure à la première épaisseur d'un facteur de 1,6 à 2,4.

7. Profil aérodynamique selon une quelconque revendication précédente, dans lequel la paroi (62) de profil aérodynamique comporte au moins un orifice (74) de refroidissement dans la jambe (66b) unique et qui s'ouvre sur la cavité (64).

8. Profil aérodynamique selon une quelconque revendication précédente, dans lequel la paroi (62) de profil aérodynamique comporte un insert (76) situé dans une poche entre la seconde section (72b) du premier bras (66a) et la seconde section (72b) du second bras (66a).

9. Profil aérodynamique selon la revendication 8, dans lequel l'insert (76) comporte un côté (76a) avant concave et un côté (76b) arrière convexe orientés respectivement vers le bord (62a) d'attaque et le bord (62b) de fuite, et le côté (76a) avant concave et le côté (76b) arrière convexe ont des rayons de courbure approximativement équivalents.

10. Profil aérodynamique selon la revendication 9, dans lequel la paroi (62) de profil aérodynamique comporte une première et une seconde couches (78, 80) de fibres, la première couche (78) de fibres étant en contact avec et conforme au côté (76a) avant concave, la seconde couche (80) de fibres étant en contact avec et conforme au côté (76b) arrière convexe, et les rayons de courbure du côté (76a) avant concave et du côté (76b) arrière convexe sont égaux à un rayon de courbure minimal des première et seconde couches (78, 80) de fibres.

11. Profil aérodynamique selon une quelconque revendication précédente, dans lequel la paroi (62) de profil aérodynamique comporte des première et seconde couches (82) de bord de fuite entre lesquelles la jambe (66b) unique est intercalée, les première et seconde couches (82) de bord de fuite s'étendant le long de la jambe (66b) unique et le long d'une partie des secondes sections (72b) des premier et second bras (66a), respectivement.

12. Profil aérodynamique selon la revendication 11, dans lequel les première et seconde couches (82) de bord de fuite se terminent à un emplacement situé à l'arrière des premières sections (72a) des premier et second bras (66a) respectivement, et qui est à l'avant d'un emplacement où les premier et second bras (66a) fusionnent pour former la jambe (66b) unique.

13. Profil aérodynamique selon la revendication 11 ou 12, dans lequel la paroi (62) de profil aérodynamique comporte au moins une couche (84) de fibres de peau qui enveloppe la cavité (64) et chevauche partiellement les première et seconde couches (82) de bord de fuite.

14. Profil aérodynamique selon une quelconque revendication précédente, où le bord (62b) de fuite est usiné.

15. Moteur à turbine à gaz comprenant :
une section (24) de compresseur ;
une chambre de combustion (56) en communication fluidique avec la section (24) de compresseur ; et
une section (28) de turbine en communication fluidique avec la chambre de combustion (56), la section (28) de turbine comportant une pluralité de profils aérodynamiques (60), chaque profil aérodynamique (60) étant conforme selon une quelconque revendication précédente.
